# EUROPEAN PATENT APPLICATION

(11) **EP 2 472 278 A1**
(43) Date of publication of application: **04.07.2012**
(21) Application number: 11824326.0
(22) Date of filing: 05.10.2011
(51) Int. Cl.: G01R 31/36

(54) **POWER MANAGEMENT SYSTEM**

(30) Priority: 15.10.2010 JP 2010232982
(71) Applicant: Sanyo Electric Co., Ltd., Osaka 570-8677 (JP)
(72) Inventor: OKUDA, Yasuo, Osaka 570-8677 (JP); SAKAI, Souichi, Osaka 570-8677 (JP); IWASAKI, Toshiya, Osaka 570-8677 (JP)
(74) Representative: Glawe, Delfs, Moll
(86) International application number: PCT/JP2011/072930
(87) International publication number: WO 2012/050014

(57) **Abstract**

An electric power management system is provided which executes charge and discharge control by detecting a state of charge of a storage battery pack with a high precision and controls charging and discharging of a storage battery system (22) comprising a plurality of storage battery units. A total storage battery unit manager (16) calculates an SOC of all storage battery packs in the storage battery system (22), and controls charging and discharging based on the calculated SOC. When a wait state, where the storage battery system (22) is not charging or discharging, continues for a predetermined period, the SOC is calculated using a correlation relationship between an electromotive force and the SOC, to remove the influence of hysteresis.

## Description

### TECHNICAL FIELD

The present invention relates to an electric power management system, and in particular, to a system which controls charging and discharging of a storage battery.

### BACKGROUND ART

In management of electric power, it is preferable to generate power or supply power according to an amount of power consumption of a load. Patent Literature 1 discloses, as a power supply system of a network system, a structure having a plurality of solar light generated power supply systems connected to a communication line, and an information source device which measures weather information such as an amount of sunshine and transmits the weather information to the solar light generated power supply systems.

On the other hand, an electricity storage device comprising a lithium ion battery or the like is used for storing the electric power generated by the solar light power generation and for handling a varying amount of power consumption by the load. Patent Literature 2 discloses a management device of a lithium ion battery in which a state of charge/discharge of a lithium ion battery is judged based on a measurement value of a charging/discharging current of the lithium ion battery, a measurement value of the temperature, and information of supply of a commercial power supply, and a remaining capacity of the lithium ion battery is calculated.

### [Related Art References]

### [Patent Literature]

[Patent Literature 1] JP 2008-136259 A
[Patent Literature 2] JP 2006-140094 A

### DISCLOSURE OF INVENTION

### [Technical Problem]

A secondary battery such as the lithium ion battery of the electricity storage device has an inter-terminal voltage of a unit storage battery, which is generally called a unit cell, of about 1 V - 4 V, and has a relatively small capacity. Thus, it is necessary to form a storage battery pack using a plurality of unit cells, and to use a plurality of storage battery packs to form the electricity storage device.

When a plurality of storage battery packs are used in this manner, even if the usage environment is identical, as the charge and discharge cycles are repeated, individual differences among the storage battery packs becomes obvious, and variations in the characteristics may occur among the plurality of storage battery packs. Therefore, in order to effectively use the storage battery in the electric power management system, it is necessary to assume that variation in the characteristic occurs among the plurality of storage battery packs, and to control the charging and discharging in consideration of the variation in the characteristic.

In this regard, one of the characteristics of the storage battery is a state of charge, and a configuration may be considered in which the charging and discharging are controlled such that the state of charge is within a desired range. In order to do so, it is necessary to accurately detect the state of charge of the storage battery.

An advantage of the present invention is provision of a system which can accurately detect a state of charge of a storage battery pack, so that suitable charge and discharge control of the storage battery can be executed.

### [Solution to Problem]

According to one aspect of the present invention, there is provided an electric power management system which controls charging and discharging of an electricity storage unit which is charged by electric power from an electric power supply and which discharges the stored electric power to a load, the system comprising a detection unit which detects a state of charge of each of a plurality of storage battery packs included in the electricity storage unit, and a control unit which controls the charging and the discharging of the electricity storage unit according to the detected state of charge, wherein the detection unit detects, in a wait state in which the electricity storage unit is not charging or discharging, the state of charge using accumulated values of charging and discharging currents while the wait state continues for a predetermined period, and detects the state of charge using a correlation relationship between an open end voltage and the state of charge when the wait state has continued for the predetermined period.

According to another aspect of the present invention, preferably, in the electric power management system, the predetermined period is variably set. For example, the predetermined period is adaptively set according to at least one of a continued time of charging and discharging immediately before the wait state, a charging and discharging rate, a battery temperature of the electricity storage unit, and a battery type of the storage battery. Alternatively, the predetermined period is adaptively set according to a transition with respect to time of a change of voltage in the wait state in the past.

According to another aspect of the present invention, there is provided an electric power management system which controls charging and discharging of an electricity storage unit which is charged by an electric power from an electric power supply and which discharges the stored electric power to a load, the system comprising a detection unit which detects a state of charge of each of a plurality of storage battery packs included in the electricity storage unit, and a control unit which controls the charging and the discharging of the electricity storage unit according to the detected state of charge, wherein the detection unit detects the state of charge using accumulated values of charging and discharging currents until a state where an amount of change of voltage per unit time is less than or equal to a threshold value continues for a predetermined period, and detects the state of charge using a correlation relationship between an open end voltage and the state of charge when the state has continued for the predetermined period.

### [Advantageous Effects of Invention]

According to various aspects of the present invention, a state of charge of a storage battery pack can be highly precisely detected.

### BRIEF DESCRIPTION OF DRAWINGS

FIG. 1 is a basic structural diagram of an electric power management system.
FIG. 2 is an internal structural diagram of a storage battery pack.
FIG. 3 is an internal structural diagram of an electricity storage unit.
FIG. 4A is an overall process flowchart (part 1) of charge and discharge control.
FIG. 4B is an overall process flowchart (part 2) of charge and discharge control.
FIG. 5 is a time sequential explanation diagram during charging.
FIG. 6 is a time sequential explanatory diagram during discharging.
FIG. 7 is a calculation process flowchart of SOC.
FIG. 8 is a timing chart showing a calculation method of SOC.

### BEST MODE FOR CARRYING OUT THE INVENTION

A preferred embodiment of the present invention will now be described with reference to the drawings.

### 1. Basic Structure of System

First, a basic structure of an electric power management system in the present embodiment will be described.

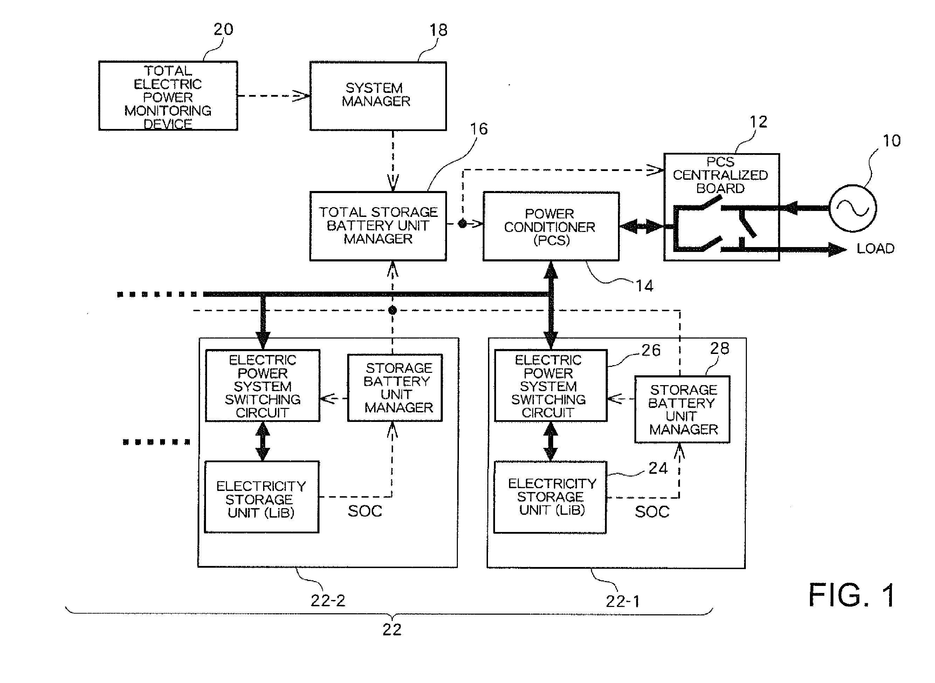

FIG. 1 shows an overall structural diagram of an electric power management system in the present embodiment. The electric power management system comprises a PCS centralized board 12 to which electric power from an external commercial power supply 10 is supplied, a power conditioner (PCS) 14, a total storage battery unit manager 16, a system manager 18, a total electric power monitoring device 20, and a storage battery system 22. The electric power management system is provided in a factory facility or the like in order to supply electric power necessary for loads such as general lighting, a general air conditioner, kitchen equipment, and office equipment such as a server and a personal computer. The supply of electric power to these loads may be executed to supply all of the electric power from the electric power management system, or using both the electric power management system and the external commercial power supply.

The external commercial power supply 10 is an alternating current electric power supply of a single phase or three phases, and is supplied from an external electric power company in a combination of electric power generated by various power generation methods, such as thermal power generation, hydroelectric power generation, nuclear power generation, etc., according to a change of supply and demand of the electric power.

The PCS centralized board 12 switches a connection between the external commercial power supply 10 and the storage battery system 22. That is, during charging and discharging, the PCS centralized board 12 switches a switch to connect an alternating current system of the external commercial power supply 10 and the storage battery system 22, and during a period when the charging and discharging are prohibited, the PCS centralized board 12 switches the switch to disconnect the connection between the alternating current system of the external commercial power supply 10 and the storage battery system 22. When the switch of the PCS centralized board 12 connects the alternating current system of the external commercial power supply 10 and the storage battery system 22, if a potential of the storage battery system 22 is higher than a potential of the external commercial power supply 10, the electric power stored in the storage battery system 22 is discharged, and if the potential of the storage battery system 22 is lower than the potential of the external commercial power supply 10, the electric power is charged from the external commercial power supply 10 to the storage battery system 22. The PCS centralized board 12 is switch-controlled by a control instruction from the total storage battery unit manager 16, and outputs an instruction for charging/discharging to the power conditioner 14 based on a control instruction from the total storage battery management unit manager 16.

The power conditioner 14 comprises a bidirectional AC-DC converter, converts alternating current power from the external commercial power supply 10 into direct current power and supplies the direct current power to the storage battery system 22 during charging, and converts direct current power from the storage battery system 22 into alternating current power and supplies the alternating current power to an alternating current load during discharging. Alternatively, a DC-DC converter (not shown) may be provided on a side of a DC system of the power conditioner 14 to convert direct current power from the storage battery system 22 into direct current power of a relatively low voltage, and supply the converted direct current power to a direct current load during discharging. The power conditioner 14 is provided common to a plurality of storage battery systems 22, and collectively executes the electric power conversion of the plurality of storage battery systems 22. One or a plurality of the power conditioners 14 may be provided, and each of the plurality of power conditioners collectively controls a plurality of storage battery systems 22. The one or plurality of power conditioners 14 are controlled by a control instruction from the PCS centralized board 12.

The total storage battery unit manager 16 judges whether or not the charge and discharge control instruction from the system manager 18 can be executed based on the charge and discharge control instruction from the system manager 18 and data from electricity storage units 22-1, 22-2, ... of the storage battery system 22, outputs a charge instruction or a discharge instruction to the power conditioner 14 based on a result of the judgment, and outputs a charge instruction or a discharge instruction to a storage battery unit manager 28 of each of the electricity storage units 22-1, 22-2, ... . The judgment of whether or not the charging and discharging are to be executed at the total storage battery unit manager 16 is determined based on the states of charge and voltages of the electricity storage units 22-1, 22-2, .... This process will be further described later.

The system manager 18 outputs the charge and discharge instructions to the total storage battery unit manager 16 based on management information from the total electric power monitoring device 20. That is, the total electric power monitoring device 20 obtains data related to an electric power necessary for the load side and electric power on the side of the storage battery and outputs the management information. The system manager 18 determines whether the storage battery system 22 should be charged or discharged based on the management information and outputs the charge and discharge control instruction. The charge and discharge control instruction may be an instruction in which charge and discharge conditions are shown with an electric power value and time such as "charge at ** kW for ** seconds" or "discharge at ** kW for ** seconds", or may be an instruction in which the charge and discharge conditions are shown with an electric power value and a completion voltage or SOC such as "charge (discharge) at ** KW until the voltage becomes ** V" or "charge (discharge) at ** kW until the SOC becomes ** %". For example, in order to inhibit a peak electric power of the external commercial power supply 10 becoming excessive due to a change of the power consumption of the load, the system manager 18 schedules charging and discharging to smooth the electric power from the external commercial power supply 10 by converting the alternating current power from the external commercial power supply 10 into direct current power and charging the storage battery system 22 prior to time which is expected to have the peak electric power, and by discharging from the electricity storage device 22 to the load at the time of the peak electric power. The charge and discharge control instruction from the system manager 18 is output to the total storage battery unit manager 16 irregularly and at necessary times. Therefore, the present electric power management system transitions among three states including a charging state at a certain time, a discharging state at another time, and a wait state at another time in which no charging or discharging is executed.

The storage battery system 22 comprises a plurality of electricity storage units 22-1, 22-2, .... For example, the storage battery system 22 comprises five electricity storage units 22-1, 22-2, ... 22-5. Each of the electricity storage units 22-1, 22-2, ... has the same structure. With reference to the electricity storage unit 22-1 as an example, the electricity storage unit 22-1 comprises a battery module, an electric power system switching circuit 26, and a storage battery unit manager 28.

The battery module includes a plurality of storage battery packs, and each storage battery pack includes a plurality of unit cells. The unit cell is formed with a lithium ion secondary battery. The structure of the battery module will be further described later.

The electric power system switching circuit 26 is a circuit which switches between discharging and charging. During charging of the storage battery system 22, a charge switch is switched ON and a discharge switch is switched OFF. During discharging of the storage battery system 22, the charge switch is switched OFF and the discharge switch is switched ON. The switching ON/Off of the charge switch and the discharge switch is controlled by an instruction from the storage battery unit manager 28.

The storage battery unit manager 28 receives data such as a charge percentage SOC as a state of charge from each storage battery pack of the plurality of storage battery packs of the battery module, and outputs the data of SOC or the like to the total storage battery unit manager 16. Here, SOC is a parameter representing, as a percentage, a ratio of a dischargeable capacity (remaining capacity) with respect to a fully charged capacity. The total storage battery unit manager 16 judges whether or not to execute charging and discharging based on the data such as SOC supplied from each storage battery unit manager 28 of each of the electricity storage units 22-1, 22-2, ... 22-5, and instructs charging and discharging to the storage battery unit manager 28 of each of the electricity storage units 22-1, 22-2, ... 22-5 based on the result of the judgment. In response to the charge and discharge instructions, the storage battery unit manager 28 controls the charge switch to the ON state when the instruction is a charge instruction and controls the discharge switch to the ON state when the instruction is a discharge instruction.

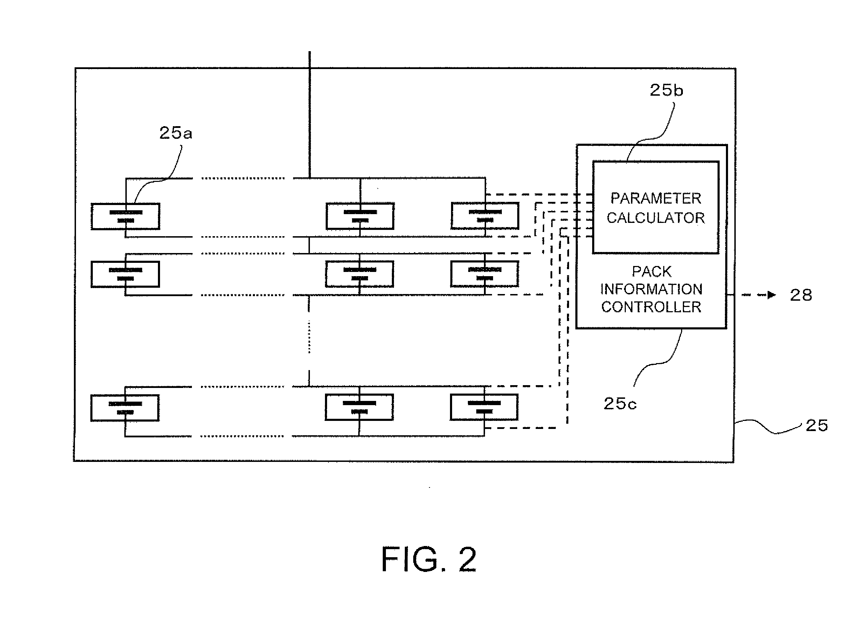

FIG. 2 shows an internal structure of the storage battery pack 25 of the battery module. The storage battery pack 25 is formed by connecting a plurality of lithium ion unit cells 25a in series and in parallel. For example, 24 unit cells 25a are connected in parallel and 13 parallel connections are connected in series. The storage battery pack 25 comprises, in addition to these plurality of unit cells 25a, a pack information controller 25c including a parameter calculator 25b.

The parameter calculator 25b measures a current value and a voltage value of each stage where the unit cells are connected in parallel, and measures a current value and a voltage value between a positive electrode and a negative electrode of the storage battery pack, SOC of the storage battery pack, and temperature of each storage battery pack, and outputs the measured information to the pack information controller 25c. The SOC may be determined from an accumulated value of charging and discharging currents or determined by referring to an equation or a table representing a relationship between an open end voltage and the SOC which is determined in advance. The calculation method of the SOC will be further described later. Because the storage battery pack has an internal resistance and an internal capacitance, there may be cases where the open end voltage cannot be accurately determined. There may be cases where the dischargeable capacity cannot be determined. By selectively using or combining the above-described SOC calculation methods according to the circumstances, the SOC which indicates the dischargeable capacity can be more accurately determined.

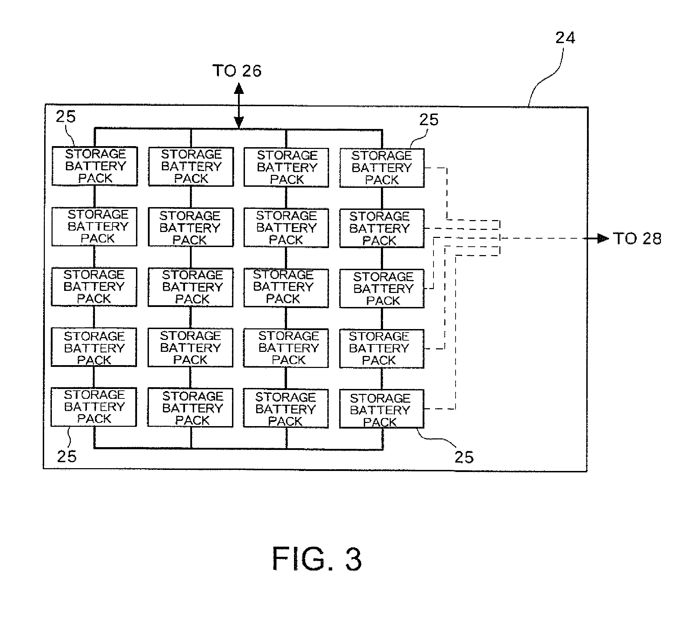

FIG. 3 shows an internal structure of the battery module. The storage battery unit 24 is formed by connecting a plurality of storage battery packs 25 shown in FIG. 2 in series and in parallel. That is, for example, 5 storage battery packs 25 are connected in series, and 4 series connections are connected in parallel. The data from the pack information controller 25c of each storage battery pack 25, that is, the current value and voltage value of each unit cell, the current value and voltage value of each storage battery pack, the SOC of each storage battery pack, and the temperature of each storage battery pack are output through a communication line to the storage battery unit manager 28.

### 2. Basic Charge and Discharge Control of System

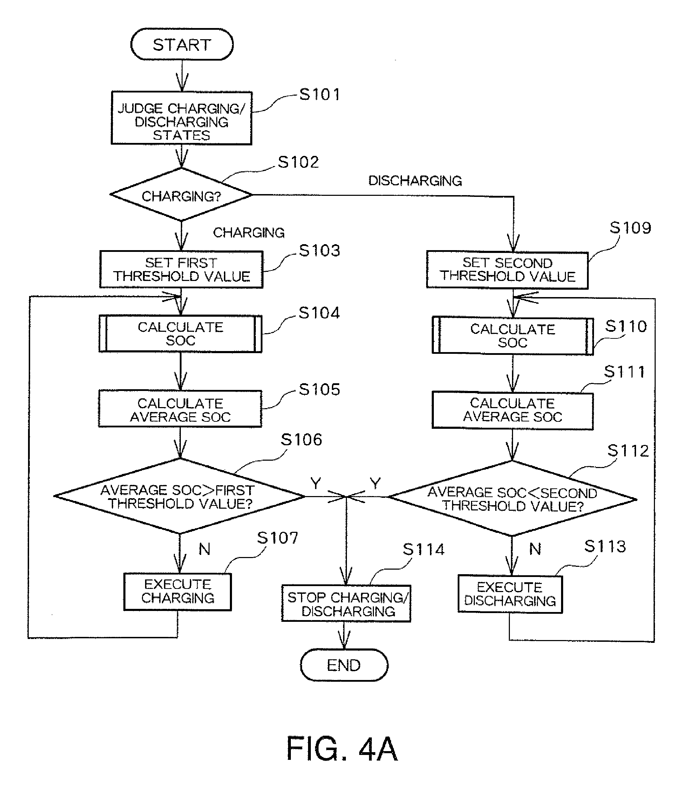

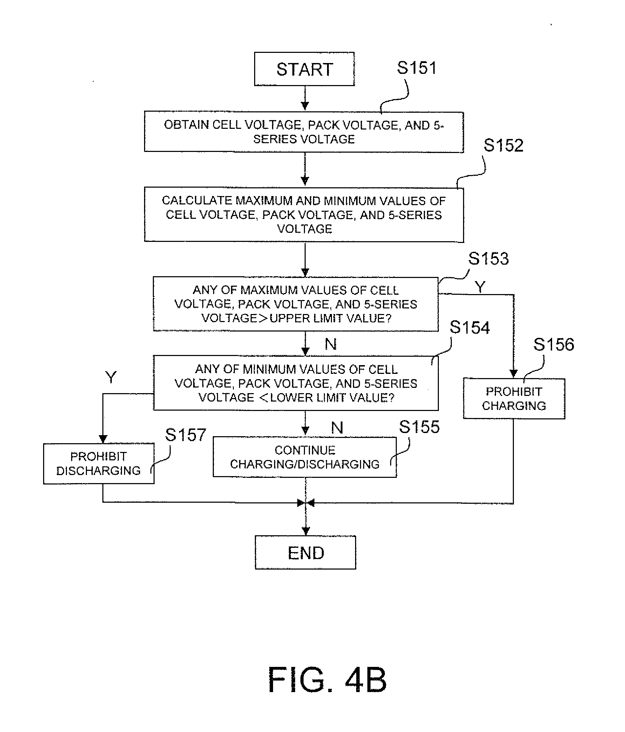

Next, basic charge and discharge control of the system in the above-described structure will be described. FIGs. 4A and 4B show process flowcharts of the present embodiment. FIG. 4A is a process flowcharts of the charge and discharge control using an average value of the SOC, and FIG. 4B is a process flowchart of the charge and discharge control using a cell voltage, a pack voltage, and a 5-series voltage. In the electric power management system of the present embodiment, the charge and discharge controls of these two flowcharts are executed in parallel, and a configuration is employed in which, when a charge prohibition state or a discharge prohibition state is reached in one of the flowcharts, the electric power management system is prohibited from charging or discharging.

First, the process flowchart of the charge and discharge control using the average value of the SOC shown in FIG. 4A will be described.

The system manager 18 determines whether to execute charging or discharging, and outputs the charge and discharge control instruction to the total storage battery unit manager 16 (S101). Next, the total storage battery unit manager 16 judges whether the instruction is charging or discharging based on the charge and discharge control instruction (S102) . In the following, the process will be described separately for the charge instruction and the discharge instruction.

### <Case of Charge Instruction>

When the instruction is the charge instruction, the total storage battery unit manager 16 sets a first threshold value in the storage battery unit manager 28 of each of the electricity storage units 22-1, 22-2, ... 22-5 (S103). In this process, a value higher than the average SOC calculated before the charging is set as the first threshold value. The first threshold value is a target value of charging, and with the subsequent process, the charging is executed until the average SOC reaches the first threshold value.

The total storage battery unit manager 16 obtains the SOC for each storage battery pack from the storage battery unit manager 28 of each of the electricity storage units 22-1, 22-2, ... 22-5 (S104), and calculates an average SOC of the storage battery system 22 (S105) When the storage battery system 22 comprises 5 electricity storage units 22-1, 22-2, ... 22-5, and each electricity storage unit 22-1, 22-2, ... 22-5 includes 5-series, 4-parallel storage battery packs 25, data of a total of 5 x 5 x 4 = 100 SOCs are output from all storage battery unit manager 28 to the total storage battery unit manager 16. Thus, the total storage battery unit manager 16 calculates an average value (average SOC) of these data of 100 SOCs, that is, the average SOC of all storage battery packs 25 in the electricity storage system 22.

After the average SOC is calculated, the total storage battery unit manager 16 judges whether or not the calculated average SOC exceeds the first threshold value (S106) . If YES in S106, that is, when the first threshold value is exceeded, the target value of charging is reached, and charging is prohibited (S114).

On the other hand, when the average SOC is less than or equal to the predetermined first threshold value, the total storage battery unit manager 16 executes charging (S107).

When the charging and discharging are to be executed while controlling the average SOC in a range of, for example, 30 % - 70 %, the first threshold value may be set at 70 %.

### <Case of Discharge Instruction>

When the instruction is the discharge instruction, the total storage battery unit manager 16 sets a second threshold value in the storage battery unit manager 28 of each of the electricity storage units 22-1, 22-2, ... 22-5 (S109). In this process, a value less than the average SOC calculated before the discharging is set as the second threshold value. The second threshold value is a target value of the discharging, and by the subsequent processes, the discharging is executed until the average SOC reaches the second threshold value.

The total storage battery unit manager 16 obtains the SOC of each storage battery pack from the storage battery unit manager 28 of each of the electricity storage units 22-1, 22-2, ...22-5 (S110), and calculates an average SOC of all storage battery packs 25 of the storage battery system 22 (S111).

After the average SOC is calculated, the total storage battery unit manager 16 judges whether or not the calculated average SOC is less than the second threshold value (S112). The second threshold value is a value less than the first threshold value. If YES in S112, that is, when the average SOC is less than the second threshold value, it is judged that discharging is not appropriate, and the discharge instruction is not executed (S114).

On the other hand, if the average SOC is greater than or equal to the predetermined second threshold value, the total storage battery unit manager 16 executes the discharging (S113).

In the case that the charging and discharging are to be executed while controlling the average SOC in a range of, for example, 30% - 70%, the second threshold value maybe set at 30%.

Next, the process flowchart of the charge and discharge control using the cell voltage, pack voltage, and 5-series voltage shown in FIG. 4B will be described. The cell voltage refers to a voltage of each unit cell 25a of the storage battery pack 25 shown in FIG. 2, the pack voltage refers to a voltage of the storage battery pack 25, and the 5-series voltage refers to an overall voltage when 5 storage battery packs 25 shown in FIG. 3 are connected in series. When 13 unit cells 25a are connected in series, cell voltage = pack voltage/13 = 5-series voltage/(13 x 5).

The total storage battery unit manager 16 obtains the cell voltage, the pack voltage, and the 5-series voltage from the storage battery unit manager 28 of each of the electricity storage units 22-1, 22-2, ... 22-5 (S151), and calculates a maximum value and a minimum value of each of the cell voltage, pack voltage, and 5-series voltage (S152). When the storage battery system 22 comprises 5 electricity storage units 22-1, 22-2, ... 22-5 and each of the electricity storage units 22-1, 2-2, ... 22-5 comprises 5-series, 4-parallel storage battery packs 25, data of a total of 5 x 5 x 4 = 100 pack voltages are output from all storage battery unit managers 28 to the total storage battery unit manager 16. Thus, the total storage battery unit manager 16 calculates the maximum value and the minimum value of the data of these 100 SOCs. Similarly, the maximum value and the minimum value are calculated from a plurality of voltage values for each of the cell voltage and the 5-series voltage.

After the maximum value and the minimum value of each of the cell voltage, pack voltage, and 5-series voltage are calculated, the total storage battery unit manager 16 judges whether or not the calculated maximum value of the voltage exceeds a voltage upper limit value which is set in advance (S153). If YES in S153, that is, when the maximum value exceeds the voltage upper limit value, it is judged that charging is not appropriate, and charging is prohibited (S156). The prohibition of charging in S156 may be realized, for example, by setting a charge prohibition flag. In this case, the charge prohibition flag may be the same flag as the charge prohibition flag used in the process flowchart of FIG. 4A or may be a different flag. The voltage upper limit value may be set at a voltage value (V) necessary for preventing excessive charging.

Next, the total storage battery unit manager 16 judges whether or not the calculated minimum value of the voltage is less than a predetermined voltage lower limit value which is set in advance (S154). If YES in S154, that is, if the minimum value is less than the lower limit value, it is judged that discharging is not appropriate, and discharging is prohibited (S157). The prohibition of discharging in S157 may be realized by, for example, setting a discharge prohibition flag. Here, the discharge prohibition flag may be the same flag as the discharge prohibition flag used in the process flowchart of FIG. 4A, or may be a different flag. The voltage lower limit value may be set at a voltage value (V) necessary for preventing excessive discharging.

When the maximum value of each of the cell voltage, pack voltage, and 5-series voltage calculated by the total storage battery unit manager 16 does not satisfy the condition of S154, the charge prohibition flag and the discharge prohibition flag are not set, and the charging/discharging state is continued (S155) . The process flowchart of FIG. 4B is executed at a regular interval such as, for example, once every second, to control the charging and discharging.

With the charge and discharge control using the average SOC of FIG. 4A alone, there may be cases where an abnormality occurring in the series connection between unit cells or an abnormality occurring in the series connection between storage battery packs cannot be detected. In consideration of this, by executing the charge and discharge control of FIG. 4B in parallel, the cell voltage, the pack voltage, and the 5-series voltage are independently compared with upper limit values, and when any of these voltages exceeds the voltage upper limit value, it is judged that an abnormality of some sort has occurred. More specifically, as shown in the process flowchart of FIG. 4B, a common voltage upper limit value is used to compare the maximum cell voltage with the voltage upper limit value, the maximum pack voltage/13 with the voltage upper limit value, and the maximum 5-series voltage/(13 x 5) with the voltage upper limit value, and when any of these values exceeds the voltage upper limit value, it is judged that there is a possibility of excessive charging, and charging is not executed. Alternatively, the upper limit values of the cell voltage, pack voltage, and 5-series voltage, for example, may be independently provided. For example, when the upper limit value of the cell voltage is set at 4.2 V, the upper limit value of the pack voltage may be set at 53 V, and the upper limit value of the 5-series voltage may be set at 250 V.

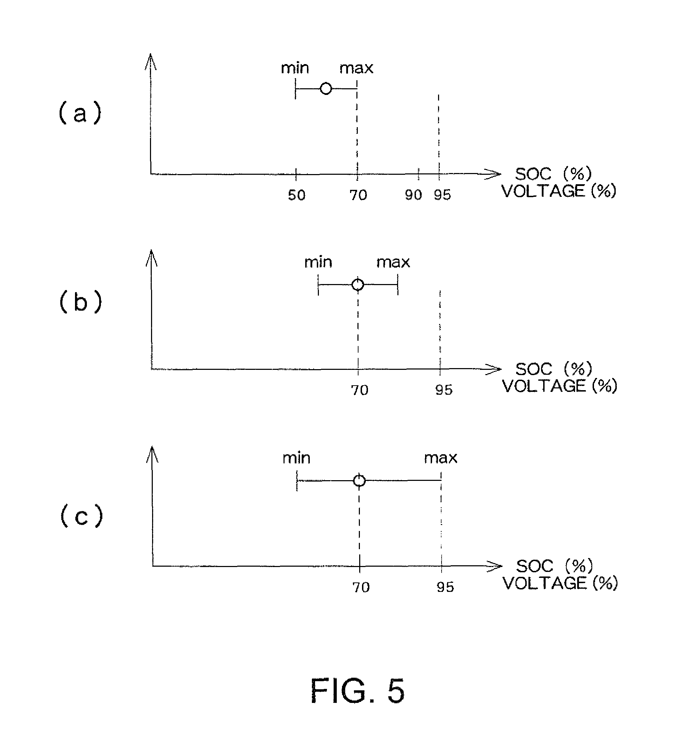

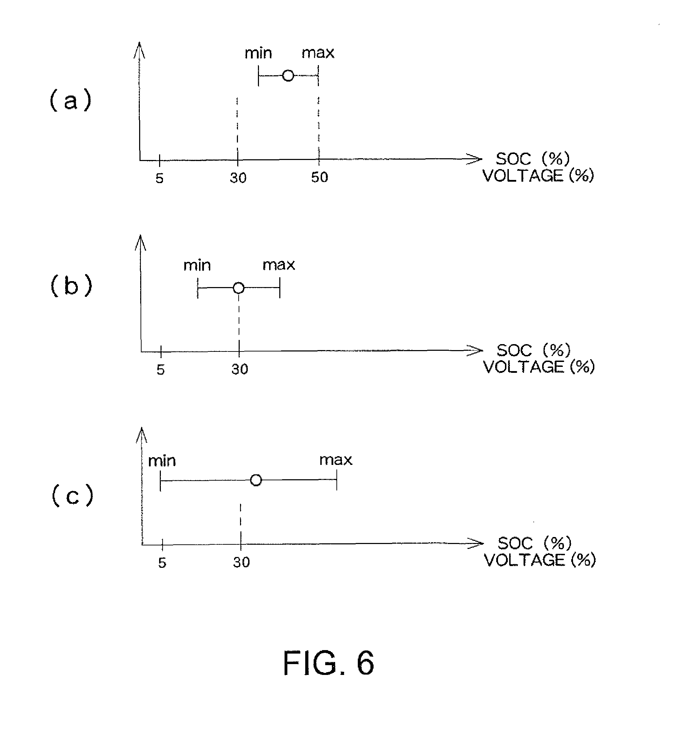

FIGs. 5 and 6 show the charge and the discharge process in a time sequence. PIG. 5 shows a charging state and FIG. 6 shows a discharging state. As an exemplary configuration, a maximum value and a minimum value of the pack voltage are used, and in FIGs. 5 and 6, max and min represent the maximum value of the pack voltage and the minimum value of the pack voltage, respectively, and a circle represents the average SOC. For the purpose of convenience, the voltage value of the pack voltage is shown as a percentage. First, the process of FIG. 5 will be described. As shown in FIG. 5(a), when the average SOC is less than or equal to 70%, which is the first threshold value, and the maximum value of the pack voltage is less than or equal to the upper limit value, the charge instruction is executed and the structure is set in the charging state.

When charging progresses and the SOC increases, to a state where the average SOC reaches the first threshold value of 70% as shown in FIG. 5 (b), charging is prohibited. In addition, as shown in FIG. 5(c), even if the average SOC has not reached the first threshold value of 70%, when the variation among the storage battery packs 25 increases and the maximum value of the pack voltage reaches the upper limit value, charging is prohibited in order to prevent excessive charging. Although not shown in FIG. 5, even when the average SOC has not reached the first threshold value of 70% and the maximum value of the pack voltage has not reached the upper limit value, when one of the maximum cell voltage and the maximum 5-series voltage has reached the voltage upper limit value, the charging is prohibited at that point.

Next, the process of FIG. 6 will be described. When the average SOC is greater than or equal to 30%, which is the second threshold value, and the minimum value of the pack voltage is less than or equal to the lower limit value, as shown in FIG. 6(a), the discharge instruction is executed, and the structure is set in the discharging state.

When the discharging progresses and the SOC reduces to a state where the average SOC reaches the second threshold value of 30% as shown in FIG. 6 (b), the discharging is prohibited. In addition, as shown in FIG. 6(c), even when the average SOC has not reached the second threshold value of 30%, when the variation among the storage battery packs 25 increases and the minimum value of the pack voltage reaches the lower limit value, discharging is prohibited in order to prevent excessive discharging. Although not shown in FIG. 6, even when the average SOC has not reached the second threshold value of 30% and the minimum value of the pack voltage has not reached the lower limit value, when one of the minimum cell voltage and the minimum 5-series voltage reaches the voltage lower limit value, the discharging is prohibited at that point.

With these processes, the charging and the discharging are controlled such that the average SOC is within a range of 30% - 70%, and excessive charging or excessive discharging due to variation in characteristic among the storage battery packs 25 or defects in the storage battery pack 25, or in the series connection of the storage batteries 25, can be reliably prevented. Even if excessive charging is not reached, when the storage battery pack 25 is left in a state where the storage battery pack 25 is charged to a high voltage close to the excessive charging, the battery lifetime is significantly shortened. With the above-described processes, the leaving of the storage battery pack 25 in a high voltage state is prevented, so that degradation of the battery can be prevented and the lifetime of the battery can be prolonged.

### 3. SOC Calculation Process

As described, the total storage battery unit manager 16 judges whether or not to execute the charge and discharge control instruction and executes the charging or discharging accordingly. In the execution of the charging or the discharging, the SOC of the storage battery system 22 is calculated (S104 and S110 in FIG. 4A). This SOC calculation process will now be described in detail.

In general, as a method of calculating the SOC of a storage battery, the following two methods are known.

### (1) Method A

This is a method where the SOC is calculated based on an amount of current flowing into or out of the storage battery. When a current of greater than or equal to a certain value flows, the amount of increase or decrease of the SOC can be relatively accurately calculated. More specifically, for an SOC at a certain point in time, charge corresponding to the charging current after this point in time accumulates over time and is added to the SOC, and charge corresponding to the discharging current after this point in time accumulates over time and is subtracted from the SOC, to calculate the SOC at an arbitrary point in time. However, in this method, a small current of less than or equal to the certain value may not be detected, and it may not be possible to detect the current in cases such as when the battery is charged in a constant voltage mode, and an error between the calculated value and the actual SOC may accumulate. Similar influence may occur by self discharge or the like in the storage battery.

### (2) Method B

This is a method where the SOC is calculated by a function of parameters of an open end voltage of the storage battery and the temperature. Specifically, there is a certain correlation between the open end voltage and the temperature and the SOC. Thus, the relationship between the open end voltage and temperature and the SOC is stored in a memory as a function or a table in advance, an open end voltage and a temperature at a certain point in time are detected, and an SOC corresponding to these parameters is calculated. When the SOC is greater than or equal to a certain value and the temperature is about room temperature, the influence of the temperature on the SOC is small compared to the open end voltage, and thus the temperature may be ignored and the open end voltage may be set as the only parameter. As this relationship may change due to degradation of the storage battery or the memory effect, regular updating of the relationship is also being proposed. In this method, the SOC can be calculated for any voltage and any current. However, it is difficult to estimate the open end voltage during the charge and discharge operations. In addition, immediately after the start of charging and discharging or immediately after transition from the charging and discharging states to the wait state, it is difficult to accurately estimate the open end voltage due to the influence of hysteresis (a state where the voltage does not immediately follow the current even when the current changes, and changes gradually).

As described, the methods A and B have respective advantages and disadvantages. Therefore, if the SOC is calculated with only one of these methods, it becomes difficult to accurately calculate the SOC as the charging and discharging of the storage battery system 22 are repeated, and consequently, it becomes difficult to accurately execute the charge and discharge control.

In consideration of the above, in the present embodiment, the SOC is calculated by combining both methods. Specifically, in consideration of the fact that the charge and discharge control instruction is irregularly output from the system manager 18 and the system transitions among the three states of the charging state, the discharging state, and the wait state, as described above, the management system of the present embodiment calculates the SOC with the method A in the charging state and the discharging state, and adds or subtracts the accumulated value of the charging or discharging current during the charging or the discharging to and from the current SOC, to calculate the SOC. When the wait state continues for a predetermined period or longer, the SOC is calculated by the method B in consideration of the fact that the influence of the hysteresis disappears and the SOC can be accurately calculated with the error corrected.

When the SOC is to be calculated with the method B during charging or discharging, if the open end voltage is measured during the charging or discharging of the storage battery system 22, accurate open end voltage cannot be measured, and accurate SOC may not be calculated. Therefore, when the SOC is calculated during charging or discharging of the storage battery system 22, it is preferable to temporarily stop the charging or discharging process, and after the SOC is calculated, restart the charging or discharging process. The interruption of the charging process during charging is fine, but the interruption of the discharging process during discharging may result in insufficient electric power being supplied to the load. Therefore, in this case, the electric power of the external commercial power supply 10 is preferably supplied to the load for compensation. This process may also be described as the external commercial power supply 10 being used as a backup power supply during interruption.

The method A can be executed by the parameter calculator 25b of each storage battery pack 25 for calculating the SOC. The calculated SOC of each storage battery pack 25 is supplied to the total storage battery unit manager 16 as already described. For the method B, a function or a table of the open end voltage and temperature and the SOC may be stored in advance in a memory of the total storage battery unit manager 16, and the method B may be executed by the total storage battery unit manager 16 to calculate the SOC. The total storage battery unit manager 16 calculates the SOC by switching between the methods A and B.

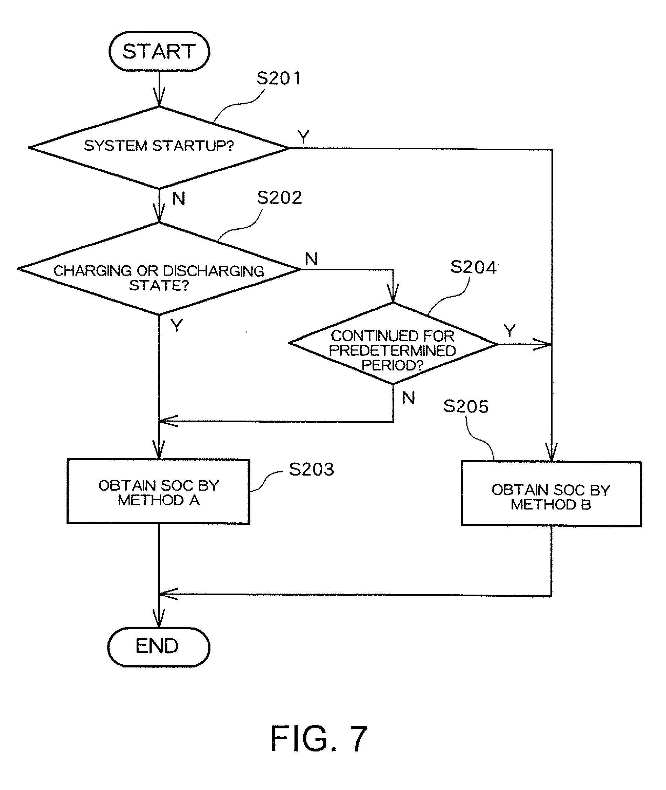

FIG. 7 shows a flowchart of the SOC calculation process in the present embodiment. First, the total storage battery unit manager 16 judges whether or not the present electric power management system is being started up (S201). If the system is being started up, the total storage battery unit manager 16 calculates the SOC by the method B (S205). The SOC calculated at the system startup is set as a reference value for subsequent SOC calculation as the SOC initial value.

When the system is not being started up, next, the total storage battery unit manager 16 judges whether or not the storage battery system 22 is in the charging state or the discharging state (S202). When the charge instruction or the discharge instruction is being executed, it is judged as YES, and the total storage battery unit manager 16 calculates the SOC by the method A (S203). That is, the total storage battery unit manager 16 accumulates the charge or discharge current value until interruption, and adds or subtracts the accumulated value to or from the SOC calculated by the method B, to calculate the SOC.

On the other hand, when it is judged in S202 that the system is neither in the charging state nor in the discharging state, that is, when the system is in the wait state, the total storage battery unit manager 16 then judges whether or not the wait state has continued for a predetermined period (S204). If the wait state has not continued for the predetermined period, the total storage battery unit manger 16 calculates the SOC by the method A assuming that there the influence of hysteresis still remains (S203). When the total storage battery unit manager 16 judges that the wait state has continued for the predetermined period, the total storage battery unit manager 16 judges that there is no influence of the hysteresis, that the change of voltage follows the change of current, and that the open end voltage can be relatively accurately detected, and calculates the SOC by the method B (S205). The calculation method of the open end voltage is known. Because the internal resistance R, the output voltage V, the open end voltage Vo, and the discharge current I are in the relationship of V = Vo + IR, pair data of (I, V) may be detected and plotted, to calculate the open end voltage Vo. The calculation of the SOC using the open end voltage Vo is also disclosed in, for example, JP 2006-194789 A assigned to the present assignee.

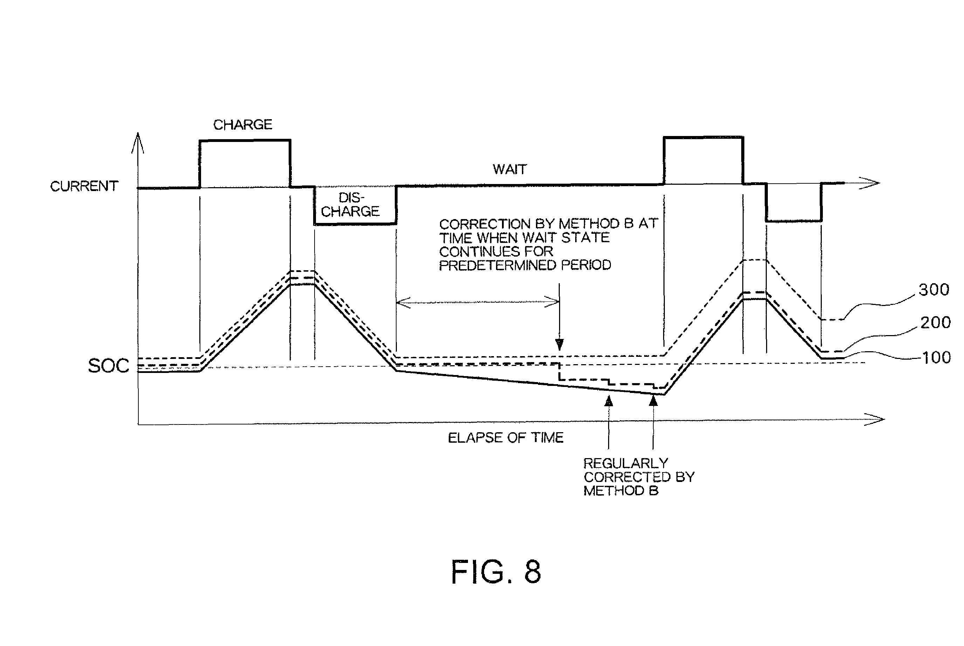

FIG. 8 shows the SOC calculation process of the present embodiment in a time sequence. In FIG. 8, reference numeral 100 represents a change with respect to time of the actual SOC, reference numeral 200 represents a change with respect to time of the SOC calculated in the present embodiment, and reference numeral 300 represents a change with respect to time of the SOC calculated by the method A alone, for the purpose of comparison. In the charging process or the discharging process, the charging process or the discharging process is interrupted and the SOC is calculated by themethodA. In this case, the SOC can be relativelyhighlyprecisely calculated, and there is almost no error from the actual SOC.

However, when the system transitions to the wait state, although the actual SOC gradually reduces due to self discharge or the like, with the method A alone it is judged that there is no change in the SOC in the wait state, and errors from the actual SOC accumulate. In the present embodiment, on the other hand, after the wait state has continued for the predetermined period, the method is switched from the method A to the method B for calculating the SOC, and thus the error from the actual SOC can be corrected. When the wait state continues further, the SOC is repeatedly calculated by the method B.

When the wait state is completed and the charging process or the discharging process is executed, the SOC is again calculated by the method A.

As is clear from FIG. 8, in the present embodiment, in the charging process or the discharging process, the charging process or the discharging process is interrupted and the SOC is calculated, and in the wait state, if the wait state continues for a predetermined period, the method is switched to the method B for calculating the SOC and for correction. Therefore, an SOC which is approximately equal to the actual SOC can be obtained.

### 4. Alternative Configurations

A preferred embodiment of the present invention has been described. The present invention, however, is not limited to the preferred embodiment, and various alternative configurations may be employed.

For example, in the present embodiment, as the electric power supply, in addition to the external commercial power supply 10, a solar cell (solar light power generation system) or the like may be used in combination. The electric power generated by the solar cell is supplied to the storage battery system 22 to charge the storage battery system 22. In this case also, when the SOC is calculated by the method A, it is preferable to interrupt the charging and discharging processes for calculation of the SOC. When the discharging process is interrupted, the solar cell may be used as the backup power supply.

In addition, in the present embodiment, an average SOC of all storagebatterypacks 25 in the storage battery system 22 is calculated and the average SOC is compared to the first threshold value or the second threshold value, but alternatively, an average voltage of all storage battery packs 25 in the storage battery system 22 may be calculated and the average voltage may be compared to a first voltage threshold value or a second voltage threshold value, in place of the average SOC.

Alternatively, the average SOC and the average voltage of all storage battery packs 25 in the storage battery system 22 may be calculated, the charging process may be prohibited when at least one of the average SOC or the average voltage exceeds the first threshold value or the first voltage threshold value, and the discharging process may be prohibited when at least one of the average SOC or the average voltage is less than the second threshold value or the second voltage threshold value.

In the present embodiment, the charging is prohibited when the maximum SOC exceeds the upper limit value and the discharging is prohibited when the minimum SOC is less than the lower limit value, but alternatively, the maximum voltage of all storage battery packs 25 may be used in place of the maximum SOC and the minimum voltage of all storage battery packs 25 may be used in place of the minimum SOC .

In addition, in the present embodiment, the charging is prohibited when at least one of the maximum cell voltage, the maximum pack voltage, and the maximum 5-series voltage exceeds the voltage upper limit value and the discharging is prohibited when at least one of the minimum cell voltage, the minimum pack voltage, and the minimum 5-series voltage is less than the voltage lower limit value, but alternatively, an arbitrary two of the cell voltage, pack voltage, and 5-series voltage may be combined for excessive charge protection or excessive discharge protection. For example, the cell voltage and the 5-series voltage may be combined, the cell voltage and the pack voltage may be combined, or the pack voltage and the 5-series voltage may be combined. When the cell voltage and the 5-series voltage are used, in the process of S153 of FIG. 4B, it is judged whether or not one of the maximum cell voltage and the maximum 5-series voltage exceeds the voltage upper limit value, and when the voltage upper limit value is exceeded, the charging process is prohibited. In the process of S154 of FIG. 4B, it is judged whether or not one of the minimum cell voltage or the minimum 5-series voltage is less than the voltage lower limit value, and the discharging process is prohibited when one of the minimum cell voltage or the minimum 5-series voltage is less than the voltage lower limit value.

In the present embodiment, as the state of charge of the storage battery pack 25, a relative charge percentage SOC (%) with the fully charged state being 100 is used, but alternatively, a remaining capacity value (A·h) may be used in place of the charge percentage SOC (%).

Moreover, in the present embodiment, the SOC is calculated using the accumulated values of the charging and discharging currents until the wait state has continued for a predetermined period, and after the wait state continues for the predetermined period, the SOC is calculated by the method B. That is, using a relationship between the open end voltage and the SOC. The predetermined period does not need to be a fixed value and may be variable. For example, the total storage battery unit manager 16 may adaptively change the predetermined period by selecting the predetermined period from among a plurality of values according to at least one of the continued time of charging/discharging immediately prior to the wait state, the charging/discharging rate, the battery temperature of the electricity storage unit, and the battery type of the electricity storage unit. Specifically, the total storage battery unit manager 16 may set a relatively longer period for the predetermined period when the continued time of charging/discharging of immediately prior is relatively long, the charging/discharging rate of immediately prior is relatively large, or the battery temperature is relatively low.

In addition, in the present embodiment, the SOC is calculated using the relationship between the open end voltage and the SOC when the wait state continues for a predetermined period, but alternatively, the total storage battery unit manager 16 may apply control such that the charging and discharging are not executed until the wait state has continued for the predetermined period. In other words, the total storage battery unit manager 16 may prohibit charging and discharging until the wait state has continued for the predetermined period. Such a configuration ensures that the wait state continues for the predetermined period.

In the present embodiment, the total storage battery unit manager 16 may count the continued time indicating how long the wait state continued, and when the charging and discharging are started again before the predetermined period has elapsed, the total storage battery unit manager 16 may reset the count and stop the count until the charging and discharging are completed again, and calculate the SOC using the accumulated values of the charging and discharging currents.

In addition, in the present embodiment, the SOC is calculated using the relationship between the open end voltage and the SOC when the wait state continues for the predetermined period, but alternatively, the total storage battery unit manager 16 may store, in an internal or external memory, a transition with respect to the time of change of the voltage when the system was in the wait state previously, analyze the transition with respect to time to predict the point in time when the voltage change settles, and adaptively set the predetermined period based on the result of the prediction.

Moreover, in the present embodiment, the SOC is calculated using the accumulated values of the charging and discharging currents until the wait state has continued for the predetermined period, and SOC is calculated using the relationship between the open end voltage and the SOC when the wait state has continued for the predetermined period, but alternatively, the total storage battery unit manager 16 may switch from the SOC calculation method using the accumulated values of the charging and discharging currents to the SOC calculation method using the relationship between the open end voltage and the SOC when a state where an amount of voltage change per unit time is reduced to a value less than or equal to a threshold value continues for a predetermined period, in place of the condition of continuation of the predetermined period of the wait state. In this case, in the process flowchart of FIG. 7, in S202, instead of judging whether or not the system is in the charging or discharging state, it is judged whether or not the amount of voltage change per unit time is less than or equal to the threshold value, the process moves to the process of S203 when the judgment is negative or to the process of S204 when the judgment is positive, and when this state continues for the predetermined period, the process moves to the process of S205 to switch from the SOC calculation using the accumulated values of the charging and discharging currents to the SOC calculation using the relationship between the open end voltage and the SOC. Similar to the above-described embodiment, in this case also, the predetermined period does not need to be a fixed value, and may be adaptively changed according to at least one of a continued time of charging/discharging immediately before, the charging/discharging rate, the battery temperature of the electricity storage unit, and the battery type of the electricity storage unit.

### [Explanation of Reference Numerals]

10 EXTERNAL COMMERCIAL POWER SUPPLY; 12 PCS CENTRALIZED BOARD; 14 POWER CONDITIONER; 16 TOTAL STORAGE BATTERY UNIT MANAGER; 18 SYSTEM MANAGER; 20 TOTAL ELECTRIC POWER MONITORING DEVICE; 22 STORAGE BATTERY SYSTEM; 24 ELECTRICITY STORAGE UNIT; 25 STORAGE BATTERY PACK; 26 ELECTRIC POWER SYSTEM SWITCHING CIRCUIT; 28 STORAGE BATTERY UNIT MANAGER

## Claims

1. An electric power management system which controls charging and discharging of an electricity storage unit which is charged by electric power from an electric power supply and which discharges the stored electric power to a load, the system comprising:
a detection unit which detects a state of charge of each of a plurality of storage battery packs included in the electricity storage unit; and
a control unit which controls the charging and the discharging of the electricity storage unit according to the detected state of charge, wherein
the detection unit detects, in a wait state in which the electricity storage unit is not charging or discharging, the state of charge using accumulated values of charging and discharging currents until the wait state continues for a predetermined period, and detects the state of charge using a correlation relationship between an open end voltage and the state of charge when the wait state has continued for the predetermined period.

2. The electric power management system according to Claim 1, wherein the predetermined period is variable.

3. The electric power management system according to Claim 2, wherein
the predetermine period is adaptively set according to at least one of a continued time of charging and discharging immediately prior to the wait state, a charging and discharging rate, a battery temperature of the electricity storage unit, and a battery type of the storage battery.

4. The electric power management system according to Claim 2, wherein
the predetermined period is adaptively set according to a transition with respect to time of a change of voltage in the wait state in the past.

5. The electric power management system according to Claim 1, wherein
the control unit applies control to prohibit the charging and the discharging of the electricity storage unit until the predetermined period has elapsed.

6. The electric power management system according to Claim 1, wherein
the detection unit counts a continued time of the wait state, and, when the charging or the discharging is started again before the predetermined period has elapsed, resets and stops the count until the charging or discharging is completed, and detects the state of charge using the accumulated values of the charging and discharging current in this charging or discharging period.

7. An electric power management system which controls charging and discharging of an electricity storage unit which is charged by electric power from an electric power supply and which discharges the stored electric power to a load, the system comprising:
a detection unit which detects a state of charge of each of a plurality of storage battery packs included in the electricity storage unit; and
a control unit which controls the charging and the discharging of the electricity storage unit according to the detected state of charge, wherein
the detection unit detects the state of charge using accumulated values of charging and discharging currents until a state where an amount of change of voltage per unit time is less than or equal to a threshold value has continued for a predetermined period, and detects the state of charge using a correlation relationship between an open end voltage and the state of charge when the state continues for the predetermined period.
